# EUROPEAN PATENT APPLICATION

(11) **EP 4 831 087 A1**
(43) Date of publication of application: **28.10.2026**
(21) Application number: 25172500.8
(22) Date of filing: 25.04.2025
(51) Int. Cl.: B65G 1/04, B65G 1/137

(54) **ROBOT PICKING DEVICE**

(71) Applicant: AutoStore Technology AS, 5578 Nedre Vats (NO)
(72) Inventor: MUNCH, Andreas, 5578 Nedre Vats (NO); IVARJORD, Åsmund, 5578 Nedre Vats (NO)
(74) Representative: Kilburn & Strode LLP

(57) **Abstract**

The disclosure relates to an automated storage and retrieval system, comprising: a storage grid (100) comprising a plurality of containers (112); a robot picking device (502) fixedly mounted above or at a top level of the storage grid (100); and a control system (400) configured to control the automated storage and retrieval system. The robot picking device (502) is configured to pick up and move a target product item from a first storage container of the plurality of containers at a top level of the storage grid (100) to a second storage container of the plurality of containers at the top level of the storage grid (100).

## Description

### TECHNICAL FIELD

The disclosure relates to a robot picking device. More particularly, it relates to an automated storage and retrieval system (AS/RS) comprising a robot picking device, and a method to move product items between storage containers in an AS/RS using a robot picking device.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems may reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid may travel. The container-handling vehicles are configured to transport containers from the grid and to deliver them to ports or stations at the periphery of the grid so that the goods within the container may be picked and packed.

The ports or stations may be positioned at the base of the grid. A plurality of storage containers may be delivered to the ports, via port columns, by the container handling robots, in order to fulfil a customer order. A user may manually pick product items from each storage container of the plurality and place them in a box, package or storage container in order to fulfil the customer's order.

One known AS/RS comprises a port and a robotic arm such that automated picking may be performed on the storage containers delivered to the port by the robotic arm in order to fulfil a customer's order. However, the throughput, speed and efficiency of the picking is bottlenecked or reduced by the need to remove storage containers from the grid, perform picking at a location distinct from the storage grid and the capacity of storage containers the port may hold.

One or more aspects of the invention of the present application are set out in the claims.

### BRIEF DESCRIPTION OF THE DRAWINGS

The disclosure will now be described in more detail in connection with a number of examples shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5a shows a perspective view of a first automated storage and retrieval system according to the present disclosure;
Fig. 5b shows a perspective view of a second automated storage and retrieval system according to the present disclosure;
Fig. 5c shows a plan view of a third automated storage and retrieval system according to the present disclosure, in a first configuration;
Fig. 5d shows a plan view of the third automated storage and retrieval system according to the present disclosure, in a second configuration;
Fig. 6 shows a flow diagram of a first method for a control system of an automated storage and retrieval system, according to the present disclosure; and
Fig. 7 shows a flow diagram of a second method for a control system of an automated storage and retrieval system, according to the present disclosure.

### DETAILED DESCRIPTION

In overview, the disclosure relates to an automated storage and retrieval system (AS/RS) with a storage grid, control system and a robot picking device mounted above, or at, a top level of the storage grid. The robot picking device may move product items between storage containers at the top of the grid in order to consolidate customer orders, consolidate storage of product items within the grid and/or resolve storage containers meeting an underfill/overfill condition. By positioning the robot picking device at the top level of the storage grid it may interact with the contents of the storage containers at the level without having to remove them from the grid, thereby improving the speed and efficiency of picking. Further, by performing picking at the storage grid (e.g. within the foot print or confines of the storage grid) it improves the spatial efficiency of the AS/RS as a port, station, system and/or conveyor separate from the storage grid are not required for picking.

In some examples, by fixedly mounting the robot picking device to a base external or separate from the storage grid, the storage grid is not impeded by the robot picking device. That is to say, the robot picking device is facilitated to operate at the top of the grid without reducing the capacity of the storage grid or causing obstruction to the rail system, grid and/or container handling vehicles. As such, the AS/RS may operate with higher throughput, more efficiency and/or with more efficient routing of container handling vehicles.

In some examples, by fixedly mounting the robot picking device in a single cell of the storage grid the robot picking device may operate at the top of the grid whilst minimizing obstruction of the rail system, grid and/or container handling vehicles. By only occupying a single cell, container handling vehicles may continue operating on adjacent rails without requiring complex rerouting. This ensures smooth traffic flow and minimizes congestion. As such, the AS/RS may operate with higher throughput, more efficiency and/or with more efficient routing of container handling vehicles.

In some examples, using vision means to identify a target product item contributes to a more robust, efficient and adaptable AS/RS. Identifying the target product item allows the robot picking device to more precisely and accurately position an end-effector to pick up the target product item and allows the robot picking device to dynamically adapt in real time, reducing the need for precise information as to the target product item's position in a storage container.

In some examples, the vision means may capture a three-dimensional shape/depth map. A 3D shape/depth map is able to provide precise distance measurements and a 3D representation of a target product item which may be processed to improve the accuracy and/or precision of the robot picking arm's movement by enhancing its ability to gauge spatial relationships, manage obstacle avoidance and/or coordinate movement of an end-effector. Further, by using a LiDAR system to capture the 3D shape/depth map, the system is more robust as the LiDAR system is impervious to changes in ambient light conditions.

By identifying the orientation, position and/or geometry of the target product item using the vision means the robot picking device may accurately align its end-effector for grasping or maintenance tool application. This reduces the risk of misalignment or damage of product items during handling resulting in a more robust system. Further, by identifying the target product item using vision means in this manner, the system may plan efficient, collision-free movements in order to pick up the product item by determining an optimal approach angle and trajectory and adjusting its grasping force, tool orientation, and motion parameters dynamically based on the identified orientation, position and/or geometry. As such, the overall speed and safety of the system is improved and the system is more adaptable to product items of different shapes and sizes.

Weighing means may be used to verify the identity of a target product item being handled by the robot picking device. Doing so improves the reliability, robustness and efficiency of the system by reducing errors.

In some examples, the system may identify overfilled containers and remove product items from the storage container to a second storage container. In doing so, the reliability and robustness of the system is improved as it reduces errors and downtime caused by overfilled containers impeding operations in the grid, such as, but not limited to, impeding the rail system, access openings and/or a lifting device of a container handling vehicle.

In some examples, the system may identify an underfilled container and move product items into the container. In doing so, the spatial efficiency and/or storage density of the system may be improved by ensuring each container is optimally filled. Product items may be moved from one underfilled container to another in order to consolidate one or more underfilled containers. By consolidating underfilled containers, the system may operate more efficiently as less occupied storage containers need to be tracked and managed by the system when fulfilling customer orders, thereby reducing handling operations, improving the speed and efficiency of order fulfilment and/or resulting in more efficient storage and transportation within the AS/RS.

In some examples, a container handling vehicle may move a product item into a reachable area of the robot picking device. This improves the efficiency and flexibility of the system as it increases the amount of storage container in the grid the robot picking device may engage with without requiring additional robot picking devices.

In some examples, the base and/or robot picking device may move as to reposition the area of the grid accessible to the robot picking device. For example, the base may comprise a gantry system and/or a rail system such that the base may reposition the robot picking device. This provides access to a larger area of the grid, expanding the operational coverage of the robot picking device and resulting in a faster and more efficient system as the robot picking device does not have to wait for a storage container to be moved into its reachable area by a secondary component of the AS/RS, such as a container handling vehicle. Further, in doing so, less movement is required for container handling vehicles, thereby allowing them to complete other tasks and improving the throughput of the system.

In some examples the product items in a customer order are consolidated into the same container at the top of the grid. This improves the efficiency of the system as the storage container no longer has to be transported to a port via a port column removing a bottleneck and improving the scalability, efficiency, throughput and speed of the system. Further, user input is reduced as the user no longer has to pick up and move the product items into a container in order to fulfil the customer order. In some examples the consolidated container may be transported by a container handling vehicle to a port for delivery. In transporting the consolidated container to a port as opposed to transporting multiple containers which need consolidating at the port, the amount of transportation to and from the port is reduced, thereby resulting in a more optimized and efficient system.

In some examples, product items which are frequently ordered by customers and thereby satisfy a frequency criterion, minimum order threshold, frequency threshold, order recurrence requirement and/or minimum order predetermined order frequency may be identified and moved to the reachable/operational area of the robot picking device. In doing so, the robot picking device may more quickly access the container, thereby improving the throughput and efficiency of the system and resulting in faster and more efficient order fulfilment. This is achieved by minimizing the required movement the robot pocking device and/or container handling vehicles have to make in order to fulfil a plurality of customer orders, wherein one or more of the customer orders comprises the target product item identified as satisfying a frequency criterion. The frequency determination may be based on a number of pending orders such that the system is certain it will require the product item multiple times therefore ensuring the efficiency, throughput and speed benefits are repeatedly and consistently realized.

In some examples movement of the robot picking device and container handling vehicles may be coordinated to avoid collisions or obstruction, thereby improving the robustness, safety, speed and efficiency of the system by reducing obstructions and collisions, thereby reducing errors and downtime.

In some examples the robot picking device may comprise interchangeable end-effectors. This improves the versatility and adaptability of the robot picking device and the system by allowing the robot picking device to perform multiple tasks such as order consolidation, order fulfilment, storage grid consolidation, maintenance and/or container capacity management. By allowing the robot picking device to autonomously switch between different tools as needed, the versatility of the system is improved by enabling a single robot to perform multiple tasks without requiring dedicated units for each function. By eliminating the need for manual tool changes, the system reduces downtime and ensures seamless transitions between operations, leading to improved efficiency. Additionally, consolidating multiple tool functions into one robot improves spatial and resource efficiency.

Also disclosed herein is a method of operating an automated storage and retrieval system (AS/RS). The method comprises identifying a first storage container, wherein the first storage container comprises a target product item, and controlling the AS/RS to position the first storage container within an area of the storage grid reachable by a robot picking device. The method further comprises controlling the robot picking device to pick up and move the target product item from the first storage container stored at the top level of the storage grid to a second storage container stored at the top level of the storage grid, based on the identification of the first storage container. The method may be performed by, and/or comprise further features corresponding to the functionality of, the AS/RS system disclosed in the preceding paragraphs of the present disclosure.

Also disclosed herein is a computer readable medium storing instructions which, when executed by one or more processors of a control system of an automated storage and retrieval system (such as the AS/RS system previously disclosed), causes the automated storage and retrieval system to perform a method comprising at least the method features disclosed in the preceding paragraph.

This overview is provided to introduce in simplified form a selection of concepts that are further described herein. The overview is not intended to identify key or essential features of the invention.

### Automated storage and retrieval system overview

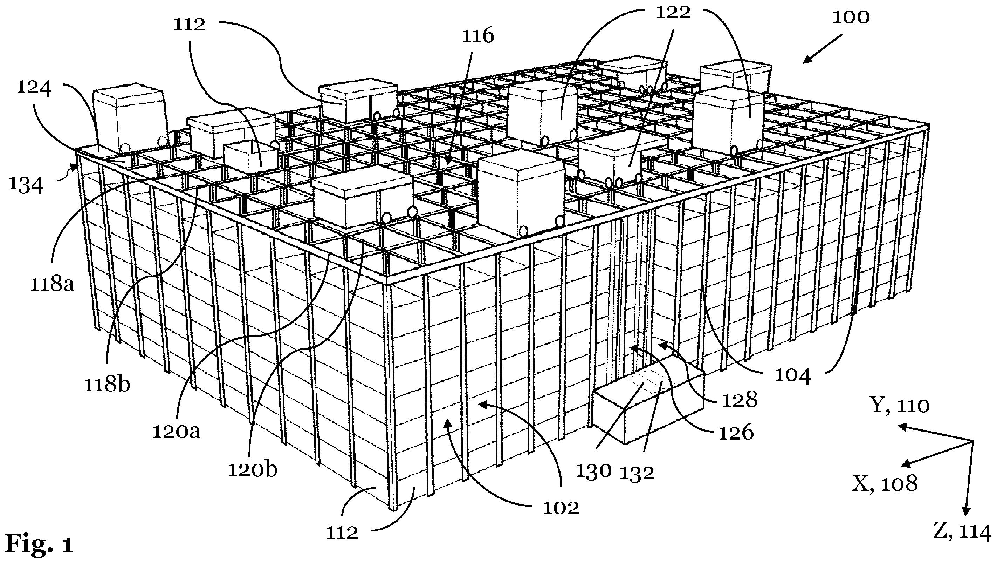

Referring to the example shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114. The storage grid 100 comprises a top level 134 of storage containers 112 in the Z direction 114, such that the storage containers 112 at the top level 134 are at the top of the stack of storage containers at each column 102 of the grid 100.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which may be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports may be located at any vertical position along the column. The respective port columns 126, 128 may be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 may comprise a conveyor (not shown in Fig. 1) onto which a bin 112 may be lowered and transported horizontally out of the port column. The port columns 126, 128 include an opening or access point through which bins 112 may enter and leave the column.

Bins 112 may be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

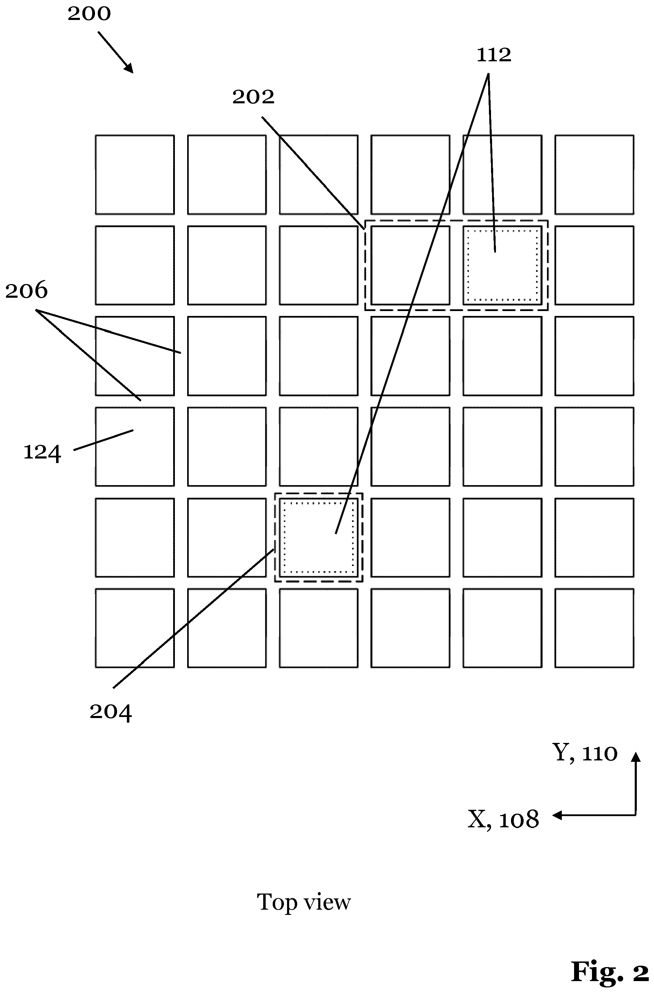

Referring to the example shown in Fig. 2, the X-Y configuration 200 of the rail system 116 may be seen in more detail, together with robots 202, 204 of different types. The rail system includes rails 206 defining between them vertical column access openings 124 for access to bins 112. The rails 206 may be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

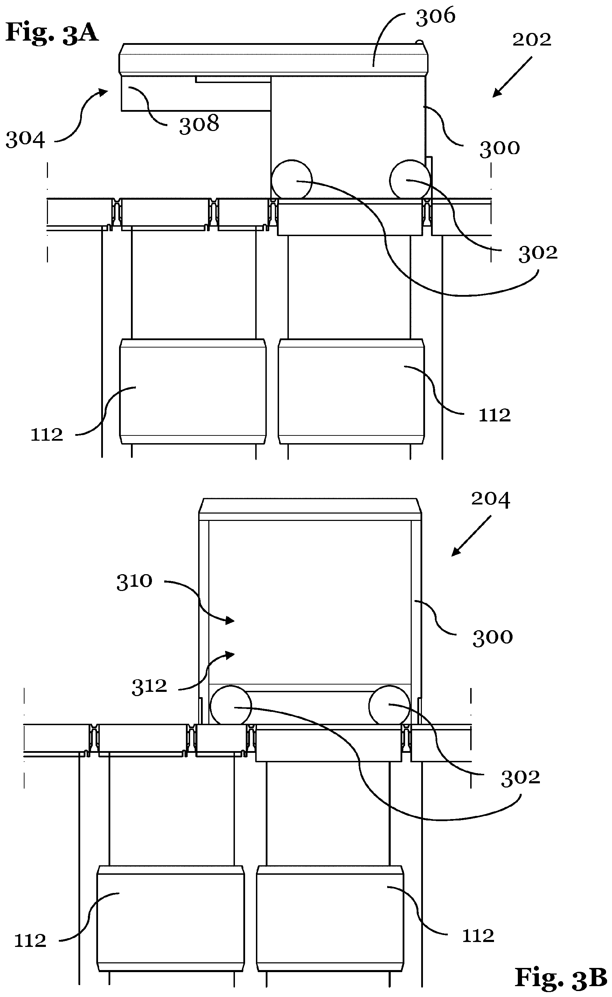

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels may be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

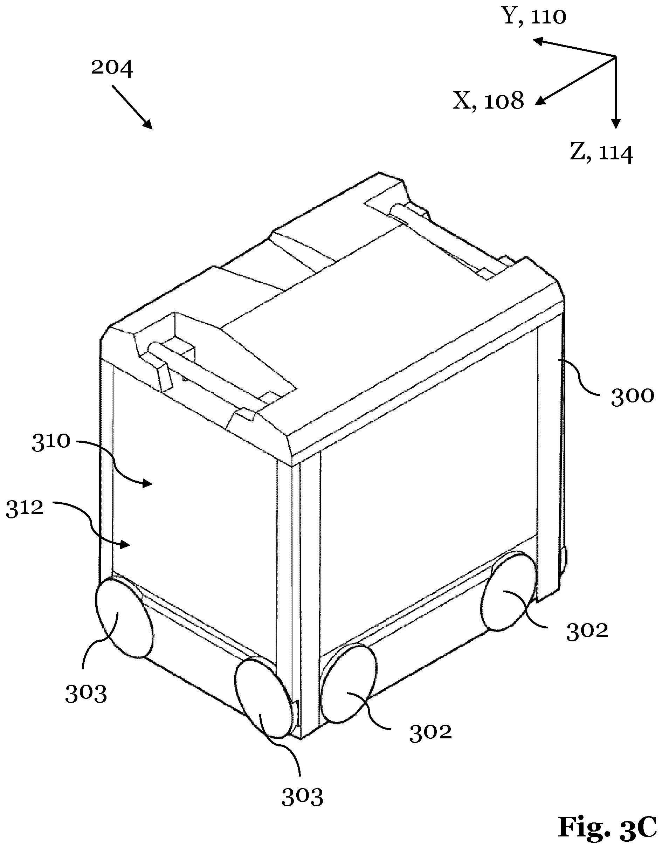

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

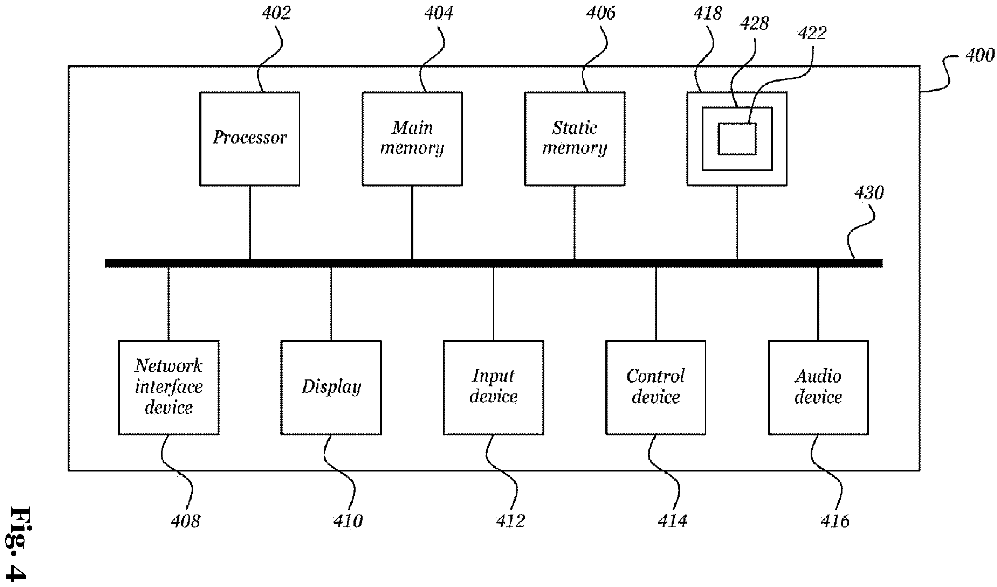

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control may be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein may be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components may be implemented as firmware or functional circuitry within hardware devices. Further, the modules and components may be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 may be carried out in a similar manner. For example, a bin 112 may be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

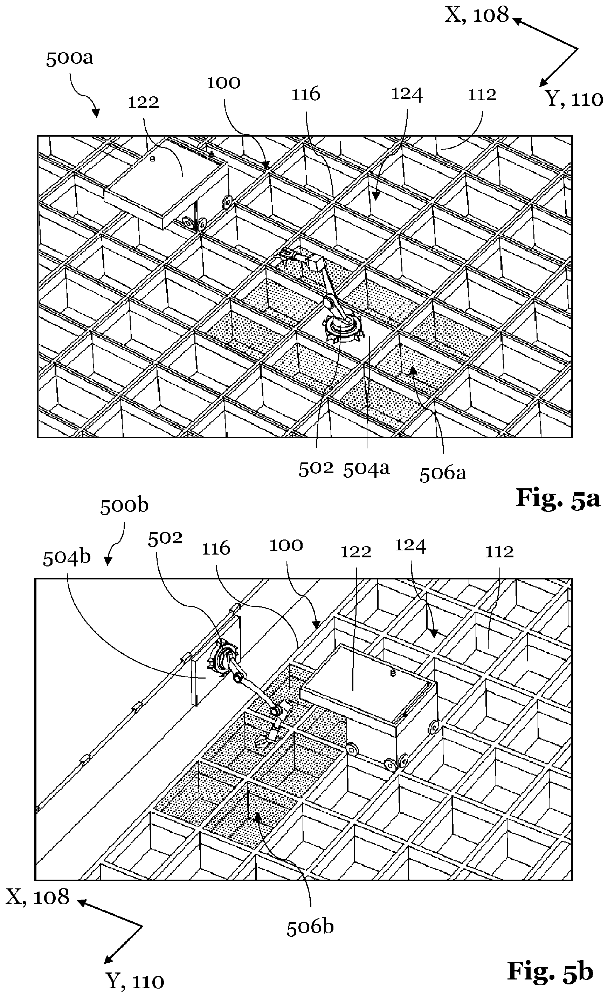

Fig. 5a shows an example of an automated storage and retrieval system (AS/RS) 500a according to the present disclosure. The AS/RS 500a comprises a storage grid 100, control system 400 (not shown), and a robot picking device 502. The AS/RS 500a further comprises a container handling vehicle 122, rail system 116, access openings 124, storage containers 112 and a base 504a for the robot picking device. In other examples, the AS/RS 500a may be provided without the robot picking device 502. The storage grid 100, control system 400, rail system 116, access openings 124 and storage containers 112 are described above with reference to Figs. 1, 2. The container handling vehicle 122 is described above with reference to Fig. 1, and/or is substantially similar to the container handling vehicles 202, 204 of Figs. 3, 4.

The robot picking device 502 may be any robot picking device 502 capable of picking up and moving a product item. The robot picking device 502 may be a three point articulated mechanical arm. The robot picking device may comprise one or more interconnected arm segments connected via one or more articulation points. The articulation points may include, but are not limited to, rotational joints, ball-and-socket joints, linear/prismatic joints, sliding/telescopic mechanisms. The robot picking device 502 may operate with multiple degrees of freedom to facilitate three-dimensional spatial positioning. The robot picking device 502 may employ a variety of drive systems, such as electromechanical, hydraulic, pneumatic, and/or hybrid actuators, which are configured to provide precise control over angular and linear motions of the robot picking device 502.

The robot picking device may comprise an end effector configured to engage with a product item such that it may be picked up and moved. The end effector may comprise various gripping mechanisms, including, but not limited to, vacuum-based suction devices, parallel or angular pinchers and/or magnetic grippers. The end effector may comprise one or more maintenance tool heads such that the robot picking device 502 may perform a maintenance task. For example, the end effector may comprise a screwdriver, hammer, leveller and/or wrench component in order to perform maintenance tasks such as tightening screws, tightening bolts, levelling the rail system 116 and performing maintenance on the container handling vehicle 122. The end effector may be interchangeable such that the end effector may be changed to accommodate different task requirements and operating environments. For example, the end effector of the robot picking device 502 could be interchangeable between a maintenance tool head end effector and a gripper end effector.

The AS/RS comprises a control system 400 for controlling operations within the AS/RS. The control system 400 may be substantially similar to the control system of Fig. 4. The control system 400 may comprise one or more controllers, such as a controller 400 associated with the robot picking device 502 for controlling the robot picking device 502, wherein the controller 400 may be substantially similar to the control system 400 described with reference to Fig. 4. The robot picking device 502 may receive instructions to control the robot picking device 502 from the control system 400, optionally via and/or from the controller 400. The instructions to control the robot picking device 502 may be based on manual input, automated methods, remote systems and/or artificial intelligence-based algorithms. The control system 400 may comprise a database of product items stored within the storage grid 400, wherein each product item in the database may be associated with a weight, a geometry, an identification of a storage container holding the product item and/or the position of the product item within the storage container. The database may further store information indicating the capacity status of each storage container in the storage grid, wherein the capacity status indicates how full a storage container is, for example the capacity status may be a measure of the space in the storage container which is occupied by product items. The capacity status may be measured by an appropriate sensor integrated into the storage grid 100, storage containers 112 or elsewhere in the AS/RS 500. The database may further comprise information based on a plurality of received customer orders such as, but not limited to, frequency data associated with each of the product items stored in the storage grid 100 wherein the frequency data is indicative of the customer order frequency of each product item within a predetermined time frame or for a number of pending customer orders. The capacity sensor may be a load cell, weight sensor, ultrasonic sensor, infrared sensor, LiDAR, time of flight sensor, optical sensor or guided wave radar. The control system 400 may control the container handling vehicles 122 to avoid collision between the container handling vehicles 122 and the robot picking device 502.

The robot picking device 502 may comprise one or more sensors such as, but not limited to, a force, torque, weight, vision, position, and/or tactile sensor to enable feedback control and accurate and adaptive object handling. The sensor(s) may also be used to identify and/or verify product items. The robot picking device 502 may identify a product item it is holding and/or one or more product items in a storage container 112 accessible to the robot picking device 502. Identifying a product item may comprise identifying the orientation, position, weight and/or geometry of the product item. The identification of the product item may be processed by the control system 400 in order to determine if the identified product item matches a target product item. The control system 400 may perform the comparison based on the database. As one example, a vision sensor, also referred to as vision means, may comprise a camera configured to capture image data and/or a LiDAR system configured to capture a three-dimensional shape map and/or a three-dimensional depth map. The control system 400 may process the image data, three-dimensional shape map and/or three-dimensional depth map to identify one or more product items. Further, the control system may use the identification to determine if an identified product item is a target product item, such as by using the database described above and/or may control the movement of the robot picking device 502 to grip a target product item based on the identification. As above, the identification may comprise an orientation, position and/or geometry identification. Additionally or alternatively, a weight senor, also referred to as a load-measuring means, may be configured to measure the weight of a product item picked up by the robot picking device 502. The control system 400 may process the weight to determine if the product item held by the robot picking device matches a target product item, for example using the database discussed above. That is to say, the one or more sensors may capture data which may be processed by the control system 400 in order to identify a product item, verify a product item is a target product item and/or control, finetune and/or adjust movement of the robot picking device 502.

The robot picking device 502 is fixedly mounted at the top level 134 of the storage grid in Fig. 5a. In another example discussed below, the robot picking device 502 is fixedly mounted above the top level 134 of the storage grid (Fig. 5b). Returning to Fig. 5a, the robot picking device is fixedly mounted to a base 504a at the top level of the storage grid 100. The base 504a may be configured to fit within a singular access opening 124 of the grid, that is to say the perimeter of the base 504a may be substantially similar to the perimeter of a storage container 112. Alternatively, the base 504a may be larger than a singular access opening and occupy a plurality of access openings. The base 504a may be configured and/or sized such that it does not interfere with the rail system 116. The base 504a may be a substantially flat panel and/or surface which may be fixedly mounted to the storage grid 100, optionally via screws, bolts and/or brackets. The base 504a may be configured to engage with the rail system 116 such that the base 504a may move in the X 108 or Y 110 directions along the top level 134 of the storage grid 100. The base 504a may be a container handling vehicle 122, optionally a container handling vehicle 202, 204 as described with reference to Figs. 3, 4 differing by virtue of having a lowered profile such that the top of the robot 202, 204 is closer to the rail system 116. The base 504a may be any robot and/or vehicle configured to run on the rail system 116. The movement of the base 504a may be controlled by the control system 400. The base 504 may be considered part of the robot picking device 502.

The robot picking device 502 is configured to access containers within a defined reachable area 506 of the storage grid 100, wherein the reachable area is determined based on the range of movement of the robot picking arm 502 relative to its base 504. In examples wherein the base 504 may move, any movement of the base 504 relative to the storage grid 100 in the X 108 or Y 110 directions results in a corresponding translation of the reachable area 506. The robot picking device may reach any position within any of the storage containers 112 within the reachable area 506. The reachable area is defined to include only those storage containers 112 that the robot picking device 502 may access entirely. If the robot picking device 502 may reach a storage container 112 but cannot access every position within it-for instance, if it cannot reach the furthest point-then that storage container 112 is excluded from the reachable area 506. In the example shown in Fig. 5a, the reachable area 506 is shown to encompass a 3x3 area of access openings 124 and their respective storage containers 112. Although the example in Fig. 5a depicts a 3×3 reachable area 506a, it is understood that the dimensions of the reachable area 506 may be varied. In some examples, the reachable area may extend to a 4×4 or 5×5 matrix of storage containers 112. In alternate examples, the reachable area 506 may be defined based on the circular range of motion of the robot picking device 502, thereby not conforming to a strict N×N configuration. For example, while a nominal N×N matrix of storage containers 112 may be established, certain storage containers 112, particularly those positioned at the corners of the matrix, may be excluded from the reachable area 506 if their positions extend beyond the circumferential reach of the robot picking device 502. This approach ensures that the defined reachable area 506 accurately reflects the operational capabilities of the robot picking device, thereby accommodating a variety of storage configurations and enhancing the overall flexibility and efficiency of the system 500.

Fig. 5b illustrates a second example of an automated storage and retrieval system 500b. This example is substantially similar to AS/RS 500a shown in Figure 5a, but it differs by employing an alternative base structure 504b. That is, it is the same as the example of Fig. 5a and encompasses the same variations, expect where stated otherwise. In this configuration, the base 504b is positioned externally to the storage grid 100 and is mounted on a wall adjacent to the storage grid 100. That is to say that the base 504b may be affixed to a wall and/or a surface extending vertically (in the Z-direction 112) from the top level 134 of storage grid 100. The base 504b comprises a linear rail system and/or a single-axis gantry. This arrangement enables the robot picking device 502 to travel along the wall in the X direction (as indicated by 108) or the Y direction (as indicated by 110). For instance, when a linear rail system is mounted on a wall oriented along the X-axis, it facilitates movement in that direction; similarly, a base 504a equipped with a single-axis gantry on a wall oriented along the Y-axis facilitates movement in the Y direction.

In other examples, the base 504b may be mounted on a plurality of walls which surround the perimeter of the storage grid 100, allowing the robot picking device 502 to move around the entire perimeter of the grid 100 across the plurality of walls. Alternatively or additionally, the robot picking device 502 and/or the base 504b may incorporate a telescopic component to extend the device away from the wall, thereby enabling access to containers positioned further from the mounting wall. This telescopic component may be integrated as part of a two-axis gantry system within the base 504b. The reachable area 506b is defined similarly to the reachable area 506a described with reference to Fig. 5a above. However, since the picking device in this example is mounted on a wall, it cannot access positions behind the wall. Consequently, the accessible grid matrix is limited to containers located in front of the wall, as the arm's range of motion is restricted by the wall's presence. Although Fig. 5b illustrates a 2×3 reachable area 506b, the dimensions of the reachable area may be varied-for example, to a 3×3 or 3×4 matrix of containers. As described in connection with Fig. 5a, the reachable area may be based on a circular or spherical envelope representing the range of motion of the robot picking arm 502 and is translated with the movement of the base 504b.

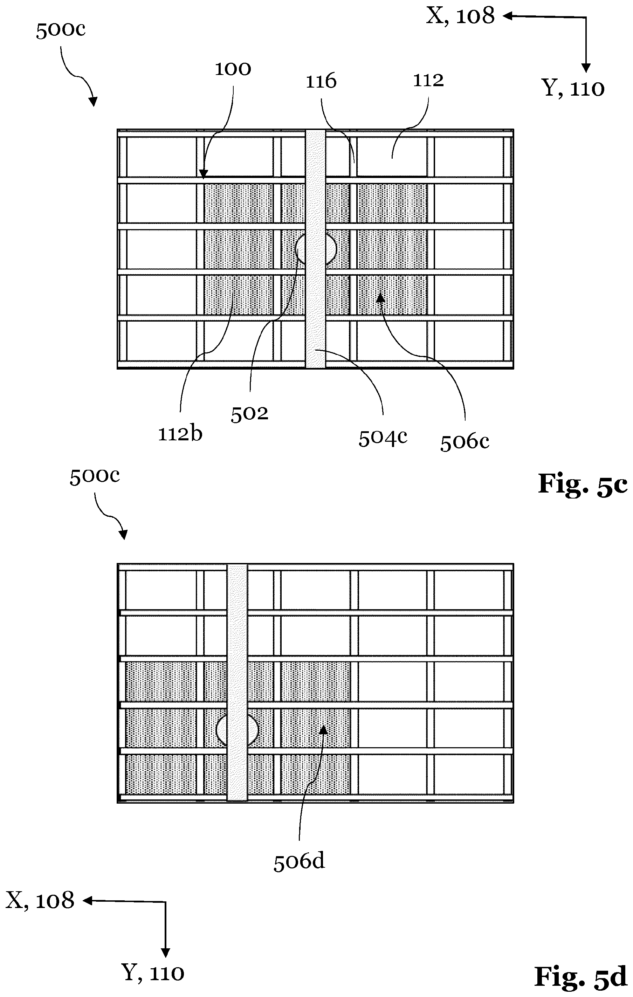

Figs. 5c and 5d show a third example of an automated storage and retrieval system 500c. The AS/RS 500c is substantially equivalent to the AS/RS 500a of Fig. 5a but differs by virtue of having an alternative base 504c. That is, it is the same as the example of Fig. 5a and encompasses the same variations, expect where stated otherwise. In this configuration, the base 504b is positioned directly above the storage grid 100. For example, the base 504b may be mounted on a ceiling, girder, beam or any surface positioned above the storage grid 100. From this position, the robot picking device 502 may access from above storage containers in the reachable area 506 of the storage grid 100. The base 506c comprises a two axis gantry system. In other examples, this may be a single axis gantry system. The gantry system allows the base 504c to move in the X direction 108 or Y direction 112 above the storage grid 100. In the first configuration depicted in Fig. 5C, the gantry system is positioned to establish a reachable area 506c. Fig. 5d illustrates the gantry system's movement along two axis to a new position, resulting in a reachable area 506d. Specifically, a supporting gantry beam is displaced to facilitate movement in the X direction 108, while a component of the gantry system enables the robot picking device to traverse the length of the gantry beam, allowing movement in the Y direction 110. Although Figures 5c and 5d depict this arrangement, the present disclosure also encompasses examples where the gantry beam is displaced in the Y direction 110, extending across the storage grid in the X direction 108. In such configurations, a component of the gantry system facilitates movement of the robot picking device 502 along the length of the gantry beam in the X direction 108. The reachable areas 506c and 506d are substantially similar to the reachable areas 506a and 506b described with reference to Figures 5a and 5b. The distinction between reachable areas 506c and 506d demonstrates the translation of a reachable area corresponding to the movement of base 504.

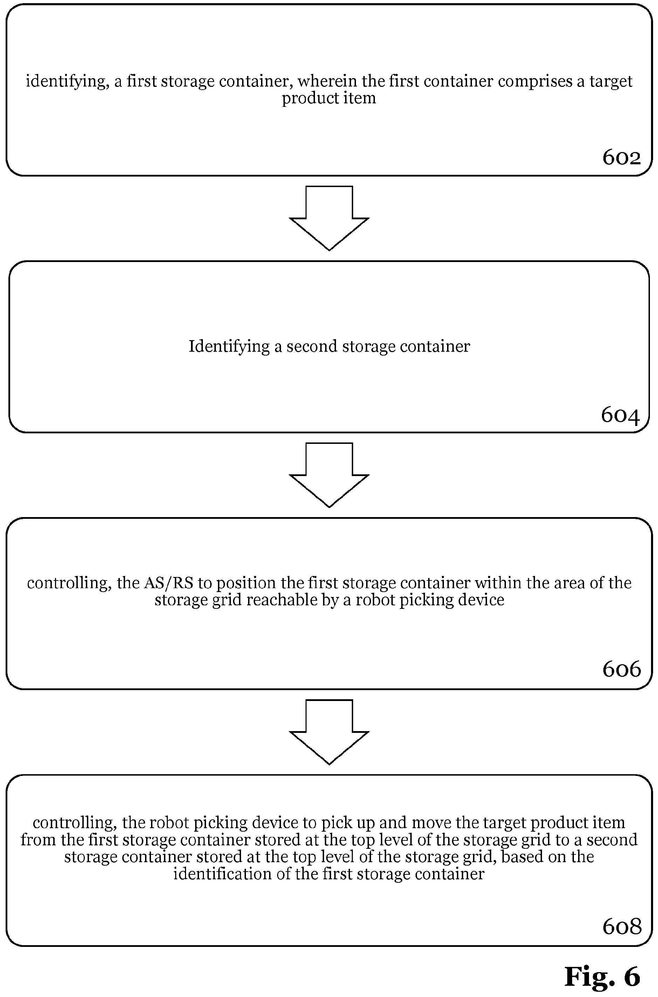

Fig. 6 shows a flow diagram of a method 600 for operating an AS/RS system according to the present disclosure. The method 600 may operate the AS/RS system to perform a picking operation. The method 600 may operate the AS/RS such that it can move a target product item between two storage containers at the top level of a grid. The method may be performed by the AS/RS 500 of Figs. 5a-d, or any other appropriate storage system. The method may be performed by a control system 400 of an AS/RS, such as the control system 400 of Fig. 4.

At operation 602, method 600 comprises identifying a first storage container 112, wherein the first storage container 112 comprises a target product item.

Identifying the first storage container 112 may comprise determining that the first storage container 112 satisfies an overfill condition and identifying the first storage container 112 based on the determination. In examples wherein it is determined that the first storage container 112 satisfies an overfill condition, any product item stored by the first storage container 112 may be identified as the target product item based on the first storage container 112 satisfying the overfill condition. In examples wherein it is determined that the first storage container 112 satisfies an overfill condition, the target product item may be identified based on its size or position in the container 112. For example, an uppermost product item in the container 112 may be determined to be the target product item and/or a product item which is sufficiently small such that it may be moved to a second storage container 112 without causing the second storage container 112 to surpass a respective overfill condition. The overfill condition may be defined as a threshold measure of the occupied space within a storage container 112. For example, the overfill condition may be a percentage, or volume of occupied space within a container 112, wherein if the container 112 exceeds the threshold, it satisfies the overfill condition. The overfill condition may be a threshold distance measure between the uppermost product item in the storage container 112 and the top of the storage container 112. The overfill condition may be predetermined or may be determined by a user. The determination may be based on user input and/or a capacity status associated with the first storage container 112 stored in a database of the control system 400. For example, the determination may be performed by comparing the capacity status associated with the container in the database of the control system 400 to the overfill condition and/or based on a user flagging the container manually as overfilled.

Additionally or alternatively, identifying the first storage container 112 may comprise determining a target product item based on a customer order and identifying the first storage container 112 as the container 112 holding the target product item. The control system 400 may receive the customer order via a cloud-based order management platform, a web API integration, an EDI gateway, an ERP system integration, a middleware/message queue system, a mobile app interface, a direct database integration, a POS system integration, a voice ordering integration or any other appropriate system. A customer order may comprise one or more product items and the target product item may be determined to be a product item of the one or more product items in the customer order. The control system 400 may identify a storage container 112 holding the target product item using a database of the control system 400 as described above with reference to Fig. 4 and Figs.5a-d. If the control system 400 identifies multiple storage container 112 which each contain the target product item, the control system 400 may select a storage container 112 based on it satisfying an overfill condition, the quantity of the product item in the storage container 112 and/or its proximity to the reachable area 506 of the robot picking device 502.

Additionally or alternatively, identifying the first storage container 112 may comprise obtaining frequency data for a plurality of product items stored in the storage grid 100 and based on the frequency data, determining that the target product item satisfies an order frequency criterion. The frequency data may be determined based on and/or stored in the database of the control system 400. The frequency data may be determined based on a plurality of received customer orders. The frequency data may indicate the order frequency of a plurality product items stored in the storage grid 100 received within a predetermined time frame, wherein the predetermined time frame may be but is not limited to a minute, ten minutes, an hour, a day, a week, a month, a year or any other appropriate time frame. The frequency data may indicate the order frequency of a plurality of product items stored in the storage grid 100 within a plurality of pending customer orders which are yet to be fulfilled. The frequency criterion may be a threshold order frequency such that if a product item is associated with an order frequency in the frequency data which surpasses the threshold, the product item satisfies the frequency criterion. The control system 400 may identify a storage container 112 holding the target product item using a database of the control system 400, as described above with reference to Fig. 4 and Figs. 5a-d. If the control system 400 identifies multiple storage container 112 which each contain the target product item, the control system 400 may select a storage container 112 based on it satisfying an overfill condition, the quantity of the product item in the storage container 112 and/or its proximity to the robot picking device 502 reachable area 506.

At operation 604, method 600 comprises identifying a second storage container 112, wherein the second storage container 112 is empty and/or satisfies an underfill condition. The second storage container 112 may be identified based on information stored in the database of the control system 400, such as the capacity status discussed with reference to Fig. 5a. In examples wherein the target product item is determined based on a customer order, an empty storage container 112 may be identified as the second storage container 112 such that the one or more product items in the customer order may be consolidated in the second storage container 112. Alternatively, in examples wherein the target product item is determined based on a customer order, a storage container 112 which satisfies the underfill condition and comprises only product items also comprised in the customer order may be determined to be the second storage container 112 such that one or more target items may be further consolidated into the container 112 to fulfill the customer order. In examples wherein the target product item is determined based on the first storage container 112 exceeding a overfill condition, a storage container 112 which satisfies an underfill condition may be determined to be the second storage container 112. The underfill condition may be defined as a threshold measure of the occupied space within a storage container 112. For example, the underfill condition may be a percentage, height, or volume of occupied space within a container 112, wherein if the container 112 fails to meet the threshold, it satisfies the underfill condition. The underfill condition may be a threshold distance measure between the uppermost product item in the storage container 112 and the top of the storage container 112. The underfill condition may be predetermined or may be determined by a user. The determination may be based on user input and/or a capacity status associated with the first storage container 112 stored in a database of the control system 400. Additionally, the second storage container 112 may be selected at least partially based on its proximity to the reachable area 506 of the robot picking device 502. Additionally or alternatively, in examples wherein the target product item is determined based on the first storage container 112 exceeding an overfill condition, a storage container 112 which may store the target product item without exceeding the overfill condition may be determined to be the second storage container 112.

At operation 606, method 600 comprises controlling the AS/RS to position the first storage container 112. Additionally or alternatively, the method 600 may comprise controlling the AS/RS to position the second storage container 112 within the area of the storage grid 100 reachable by a robot picking device 502. Controlling the AS/RS to position the first storage container 112 and/or the second storage container 112 within the area of the storage grid 100 reachable by a robot picking device 502 may be based on the identification of the first storage container 112 and/or the identification of the second storage container 112. Controlling, the AS/RS to position the first storage container 112 and/or the second storage container 112 within the area of the storage grid 100 reachable by a robot picking device 502 may comprise determining the reachable area 506 of the grid 100 by the robot picking device 502 based on the current location of the robot picking device 502 and a known reachable radius and/or area of the robot picking device 502. If at operation 602, the first storage container 112 is identified based on the storage container 112 satisfying a frequency criterion, but the target product item is not additionally identified based on a customer order, method 600 may loop back to operation 602 after completing operation 606.

If the first storage container 112 is already within the area of the storage grid 100, controlling the AS/RS to position the first storage container 112 within the area of the storage grid 100 reachable by a robot picking device 502 may comprise taking no action. If the second storage container 112 is already within the area of the storage grid 100, controlling, the AS/RS to position the second storage container 112 within the area of the storage grid 100 reachable by a robot picking device 502 may comprise taking no action.

Controlling the AS/RS to position the first storage container 112 and/or the second storage container 112 within the area of the storage grid 100 reachable by a robot picking device 502 may comprise controlling a container handling vehicle 122 to place the first storage container 112 and/or second storage container 112 in an area of the storage grid 100 reachable by the robot picking device 502. Controlling a container handling vehicle 122 to place the first storage container 112 and/or second storage container 112 in an area of the storage grid 100 reachable by the robot picking device 502 may comprise retrieving the storage container 112 from a level at, or below the top level 134 of the grid 100, to a position at the top level 134 of the grid 100 within the reachable area 506 of the robot picking device 502.

Controlling the AS/RS to position the first storage container 112 and/or the second storage container 112 within the area 506 of the storage grid 100 reachable by a robot picking device 502 may comprise moving the base 504 of the robot picking device 502 and/or moving the robot picking device 502 on the base 504. Moving the base 504 of the robot picking device 502 may comprise causing a vehicle comprising the base 504 to move on the rail system 116. Moving the base 504 of the robot picking device 502 may comprise causing a gantry beam comprising the base 504 to move in the X direction or Y direction about the storage grid 100. Moving the robot picking device 502 on the base 504 may comprise moving the robot picking device 502 along a gantry system and/or rail system 116 comprising the base 504.

At operation 608, method 600 comprises controlling the robot picking device 502 to pick up and move the target product item from the first storage container 112 stored at the top level 134 of the storage grid 100 to a second storage container 112 stored at the top level 134 of the storage grid 100, based on the identification of the first storage container 112 and the second storage container 112. Controlling the robot picking device 502 to move the target product item from the first storage container 112 stored at the top level 134 of the storage grid 100 to a second storage container 112 stored at the top level 134 of the storage grid 100 may comprise, after picking up the target product item, moving the base 504 of the robot picking device 502 and/or moving the robot picking device 502 on the base 504, as described for operation 606. Controlling, the robot picking device 502 to pick up the target product item may be based on information indicating the position of the target item in the first storage container 112 stored in the database of the control system 400.

Controlling the robot picking device 502 to pick up the target product item may comprise capturing image data, a three-dimensional shape map and/or a three-dimensional depth map and processing the image data, three-dimensional shape map and/or three-dimensional depth map being suitable for identifying the target product item within the first storage container 112. The image data, three-dimensional shape map and/or three-dimensional depth map may be captured using vision means of the robot picking device 502 and/or using vision means attached to the grid 100 and/or attached to a surface above the grid 100. The vision means may be a camera or LiDAR system. In examples wherein image data, three-dimensional shape map and/or three-dimensional depth map are processed to identify the target product item within the first storage container 112, operation 608 may further comprise picking up the target product item based on the identification of the target product item within the storage container 112. The identification of the target product item within the storage container 112 may indicate a position of the target product item within the first storage container 112. If the target product item cannot be identified then method 600 may loop back to operation 602 and a new first storage container 112 may be identified.

Controlling the robot picking device 502 to pick up the target product item may comprise measuring the weight of a product item picked up by the robot picking device 502. The weight may be determined by weighing means of the robot picking device 502 configured to measure the weight of a target product item held by the robot picking device 502. The weight may be determined by weighing means associated with the grid 100 and/or the first storage container 112 such that the weighing means may measure the weight of the first storage container 112 and calculate the weight of the product item held by the robot picking device 502 based on the decrease in the weight of the first storage container 112 after the product item was picked up by the robot picking device 502. In examples where the weight of the product item picked up by the robot picking device 502 is measured, operation 608 may further comprise processing the weight to determine if the product item held by the robot picking device 502 is the target product item. Determining if the product item held by the robot picking device 502 is the target product item may comprise comparing the weight of the product item held by the robot picking device 502 with the known weight of the target product item stored in a database of the control system 400. If the measured weight and the known weight stored in the database are within an acceptable tolerance of each other, the product item held by the robot picking device 502 may be verified/determined to be the target product item. The acceptable tolerance may be expressed as a predetermined percentage tolerance margin. If the product item held by the robot picking device 502 is verified/determined to be the target product item, operation 608 may comprise controlling the robot picking device 502 to place the product item in the second storage container 112 as described above. If the product item held by the robot is determined to not to be the target product item, operation 608 may comprise controlling the robot picking device 502 to return the product item to the first storage container 112 and to reidentify the target product item within the first storage container 112. If the target product item cannot be reidentified in the first storage container 112, the method may loop back to operation 602 and a new first storage container 112 may be identified.

Multiple instances of method 600 may be run in parallel by a single control system and an AS/RS system may comprise more than one robot picking device 502. For example, an instance of method 600 may be run for each of a plurality of customer orders, a plurality of storage container 112 identified as satisfying the overfill condition and/or for a plurality of storage container 112 identified as satisfying the frequency criterion.

An instance of method 600 may be performed iteratively until the entire customer order has been consolidated into the second storage container 112. An instance of method 600 may be performed iteratively until a storage container 112 initially identified as satisfying the overfill condition fails to meet the overfill condition.

Additionally or alternatively an instance of method 600 may be performed iteratively until the entire customer order has been consolidated into a plurality of storage container 112. In examples wherein the entire customer order has been consolidated into a plurality of storage container 112, method 600 may identify the same second storage container 112 at operation 604 at each iteration until the second storage container 112 meets a target capacity, wherein the target capacity represents a capacity status of the storage container 112 with an allowable tolerance. When the second storage container 112 reaches the target capacity, if there are still product items in the customer order which have not been placed in the second storage container 112, a third storage container 112 may be identified to consolidate the rest of the product items. This process may be repeated for as many storage containers 112 are required to consolidate and fulfil the entire customer order.

Method 600 may further comprise delivering the second storage container 112, third storage container 112 and/or any further storage container 112 for which a customer order was consolidated in to a port such that it may be accessed by a user and/or customer. Delivering the second storage container 112, third storage container 112 and/or any further storage container 112 for which a customer order was consolidated in to a port may comprise controlling one or more container handling vehicle 122s to move the storage container(s) 112 to the port.

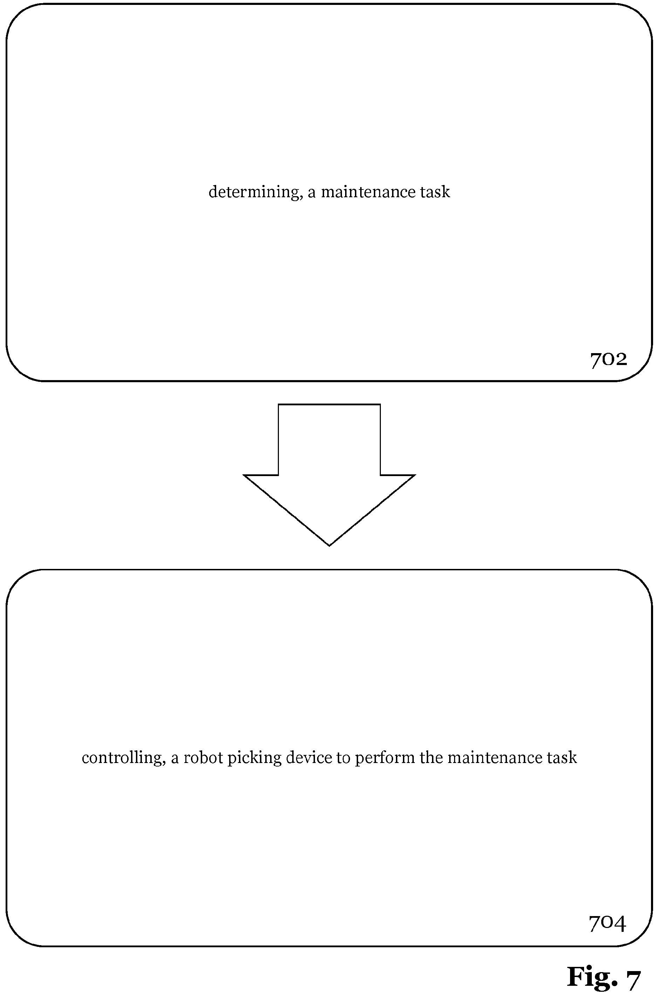

Fig. 7 shows a method 700 of operating an AS/RS according to the present disclosure. The method 700 may operate an AS/RS to perform a maintenance task. The method may be performed by the AS/RS 500 of Figs. 5a-d, or any other appropriate storage system. The method may be performed by a control system 400 of an AS/RS, such as the control system 400 of Fig. 4.

At operation 702, method 700 comprises determining a maintenance task. The maintenance task may be determined by the control system 400. The maintenance task may be determined based on sensor readings of the robot picking device 502 and/or base 504. For example, in examples wherein the robot picking device 502 is mounted to a base 504 which may travel along the rail system 116, the robot picking device 502 and/or base 504 may comprise an inclinometer (tilt sensor), accelerometer, gyroscope, imu (inertial measurement unit), laser distance sensor (lidar or laser altimeter), optical sensor with structured light, ultrasonic sensor, force/torque sensors and/or vision means and may measure any inclination or protrusions in portions of the rail system 116 on which the base 504 travels. The inclination measurements may be processed by the control system 400 to determine if a portion of the rail system 116 is within a predetermined acceptable flatness and/or inclination range. If a portion of the rail system 116 is determined to be outside the acceptable flatness and/or inclination range, a maintenance task to fix the rail system 116 may be determined. Additionally or alternatively, in examples wherein the robot picking device 502 may comprises vision means, the image data captured may be processed by the control system 400 to identify a screw, bolt and/or bracket which needs to be tightened and a maintenance task to tighten the screw, bolt and/or bracket may be determined. A maintenance task may indicate a task to be performed on a component of the AS/RS. Maintenance tasks may comprise, but are not limited to: levelling the rail system 116; tightening bolts, screws and/or brackets of the grid 100, a container handling vehicle 122 and/or rail system 116; recovering a unresponsive, stuck and/or otherwise movement impeded container handling vehicle 122; removing an obstruction on the rail system 116. Maintenance tasks may also indicate a location on the grid 100 the task is to be performed.

At operation 704, method 700 comprises controlling a robot picking device 502 to perform the maintenance task identified at step 702. Controlling the robot picking device 502 to perform the maintenance task may comprise positioning the robot picking device 502 such that the location the maintenance task is to be performed in is within the reachable area 506 of the robot picking arm. Controlling the robot picking device 502 to perform the maintenance task may comprise moving the base 504 of the robot picking device 502 and/or moving the robot picking device 502 on the base 504 as described with reference to operation 604 of method 600.

Performing the maintenance task may comprise using a robot picking device 502 with a maintenance tool head associated with the maintenance task. Performing the maintenance task may comprise controlling the robot picking device 502 to change an interchangeable end-effector to a maintenance tool head associated with the determined maintenance task. Changing the interchangeable end effector may comprise using an automatic tool changing system wherein the robot picking device 502 may position itself such that the system is within its reachable area 506 of the storage grid 100 and may then release and/or pick up a different end-effector. The robot picking device 502 may use a magnetic, pneumatic, mechanical, electromechanical and/or vacuum based system in order to pick up and release different end-effectors. End-effectors may include: a screwdriver associated with maintenance tasks such as tightening screws and/or brackets; a wrench associated with tightening bolts and/or brackets: a gripper associated with recovering a container handling vehicle 122 and/or removing an obstruction from the rail system 116. Performing the maintenance task may comprise using a robot picking device 502 with a maintenance tool head associated with the maintenance task, comprising: tightening screws and/or brackets with a screwdriver end-effector; tightening bolts and/or brackets with a wrench; gripping a container 112 handling robot with a gripper end-effector and moving it to a position accessible to an operator, such as a maintenance zone and/or the edge of the grid 100; picking up an obstacle on the rail system 116 with a gripper end-effector and moving the obstacle to a storage container 112 if it is a determined to be a product item using vision means of the robot picking device 502; picking up an obstacle on the rail system 116 with a gripper end-effector and moving the obstacle to a position accessible to an operator, such as a maintenance zone and/or the edge of the grid 100.

### Penultimate comments

In examples wherein the robot picking device 502 comprises an interchangeable end-effector, method 700 and method 600 may be performed by the same robot picking device 502. That is to say, operation 602 of method 600 may additionally comprise changing the end-effector of the robot picking device 502 to a gripper end-effector.

It is to be understood that the above description is intended to be illustrative, and not restrictive. Each possible combination of any of the above-described features forms part of the present disclosure. A plurality of instances of any feature may also be present. Many other implementations will be apparent to those of skill in the art upon reading and understanding the above description. Although the present disclosure has been described with reference to specific example implementations, it will be recognized that the disclosure is not limited to the implementations described, but may be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An automated storage and retrieval system "AS/RS" comprising:
a storage grid comprising a plurality of storage containers;
a robot picking device fixedly mounted above or at a top level of the storage grid; and
a control system configured to control the AS/RS,
wherein the plurality of storage containers comprises first and second storage containers at a top level of the storage grid, and
wherein the robot picking device is configured to pick up and move a target product item from the first storage container to the second storage container.

2. The AS/RS of claim 1, wherein the robot picking device is fixedly mounted to a base external to the storage grid.

3. The AS/RS of claim 1, wherein the robot picking device is fixedly mounted to a base at the top level of the storage grid; and optionally,
wherein the robot picking device is fixedly mounted in a single cell of the storage grid.

4. The AS/RS of any preceding claim, wherein the robot picking device further comprises vision means for identifying the target product item.

5. The AS/RS of claim 4, wherein the vision means comprises a camera configured to capture image data and wherein the control system is configured to process the image data to identify the target product item; and/or,
wherein the vision means comprises a LiDAR system configured to capture a three-dimensional shape and/or depth map and wherein the control system is configured to process the three-dimensional shape and/or depth map to identify the target product item.

6. The AS/RS of any of claims 4 or 5, wherein identifying the target product item comprises at least one of:
identifying the orientation of the product item;
identifying the position of the target product item in the first storage container; and
identifying the geometry of the product item.

7. The AS/RS of any preceding claim, wherein the robot picking device further comprises load-measuring means configured to measure the weight of a product item picked up by the robot picking device,
wherein the control system is configured to:
process the weight to determine if the product item held by the robot picking device is the target product item; and
control the robot picking device to place the product item in the second storage container if the product item is the target product item.

8. The AS/RS of any preceding claim, wherein the control system is configured to pick up and move the target product item from the first storage container to the second storage container based on:
determining that the second storage container satisfies an underfill condition; and/or,
determining that the first storage container satisfies an overfill condition.

9. The AS/RS of any preceding claim, further comprising a container handling vehicle, wherein the control system is configured to control the container handling vehicle to place the first storage container and/or second storage container in an area of the storage grid reachable by the robot picking device.

10. The AS/RS of claim 9, wherein the control system is further configured to:
determine the target product item based on a customer order;
identify the first storage container as the container holding the target product item;
control the container handling vehicle to place the first storage container in the area of the storage grid reachable by the robot picking device based on the identification of the first storage container;
determine a second target product item based on the customer order;
identify a third storage container of the plurality of containers as the container holding the target product item;
control the container handling vehicle to place the third storage container in the area of the storage grid reachable by the robot picking device based on the identification of the third storage container; and
control the robot picking device to pick up and move the second target product item from the third storage container to the second storage container.

11. The AS/RS of claim 9 or 10 when dependent on claim 8, wherein the control system is further configured to:
control the container handling vehicle to place the second storage container in the area of the storage grid reachable by the robot picking device based on determining that the second storage container satisfies an underfill condition; and/or
control the container handling vehicle to place the first storage container in the area of the storage grid reachable by the robot picking device based on determining the first storage container satisfies the overfill condition.

12. The AS/RS of any of claims 9-11, wherein the control system is further configured to:
obtain frequency data for a plurality of product items stored in the storage grid;
based on the frequency data, determine that the target product item satisfies an order frequency criterion;
determine that the first storage container contains the target product item; and
control the container handling vehicle to place the first storage container in the area of the storage grid reachable by the robot picking device based on the determination of the first storage container.

13. The AS/RS of any of claims 9-12, wherein the control system is further configured to control the container handling vehicle to avoid collision between the container handling vehicle and the robot picking device.

14. A method of operating an automated storage and retrieval system "AS/RS", the method comprising:
identifying a first storage container, wherein the first storage container comprises a target product item;
controlling the AS/RS to position the first storage container within an area of the storage grid reachable by a robot picking device; and
controlling the robot picking device to pick up and move the target product item from the first storage container stored at the top level of the storage grid to a second storage container stored at the top level of the storage grid, based on the identification of the first storage container.

15. A computer readable medium storing instructions which, when executed by one or more processors of a control system of an automated storage and retrieval system, causes the automated storage and retrieval system to perform the method of claim 14.
